## Europäisches Patentamt
## European Patent Office
## Office européen des brevets

(19)

(11) Veröffentlichungsnummer: **0 132 693**
**B1**

(12) **EUROPÄISCHE PATENTSCHRIFT**

(45) Veröffentlichungstag der Patentschrift:
03.02.88

(51) Int. Cl.⁴: **H 04 N 3/18**

(21) Anmeldenummer: **84108062.5**

(22) Anmeldetag: **10.07.84**

(54) Schaltung zur Erzeugung der Betriebsspannungen und des Horizontalablenkstromes eines Bildwiedergabegerätes.

(30) Priorität: **22.07.83 DE 3326434**

(43) Veröffentlichungstag der Anmeldung:
**13.02.85 Patentblatt 85/7**

(45) Bekanntmachung des Hinweises auf die Patenterteilung:
**03.02.88 Patentblatt 88/5**

(84) Benannte Vertragsstaaten:
**DE GB IT SE**

(56) Entgegenhaltungen:
**DE-A-3 126 792**
**US-A-4 316 127**
**US-A-4 390 820**

(73) Patentinhaber: **Alcatel N.V., De Lairessestraat 153, NL- 1075 HK Amsterdam (NL)**
(84) Benannte Vertragsstaaten: **GB IT SE**

(73) Patentinhaber: **Standard Elektrik Lorenz Aktiengesellschaft, Hellmuth- Hirth- Strasse 42, D-7000 Stuttgart 40 (DE)**
(84) Benannte Vertragsstaaten: **DE**

(72) Erfinder: **Walker, Michael, Ringstrasse 6, D-7066 Baltmannsweiler (DE)**
Erfinder: **Holanda, Ladislav, Rüderner Strasse 75, D-7300 Esslingen (DE)**

(74) Vertreter: **Pohl, Heribert, Dipl.- Ing, Standard Elektrik Lorenz AG Patent- und Lizenzwesen Postfach 30 09 29, D-7000 Stuttgart 30 (DE)**

LIBER, STOCKHOLM 1988

EP 0 132 693 B1

## Beschreibung

Die Erfindung betrifft eine Schaltung zur Erzeugung der Betriebsspannungen und des Horizontalablenkstromes eines Bildwiedergabegerätes mit einer Bildröhre gemäß dem Oberbegriff des Patentanspruchs 1.

Bildröhren, wie sie vom Fernsehen her bekannt sind, werden zunehmend auch für andere Anwendungsfälle eingesetzt. Selbst die in einem Fernsehempfänger eingebaute Bildröhre wird nicht mehr nur für das Fernsehen, sondern beispielsweise auch für Videotext- oder Bildschirmtextwiedergabe und für programmgesteuerte Bildschirmspiele verwendet. Auch Monitore und Sichtgeräte für Daten- und Zeichendarstellung in der Datenverarbeitung oder in der Bürokommunikation verwenden Bildröhren, die denen im Fernsehempfänger ähnlich sind. Die andersartigen Darstellungen (vor allem große einfarbige Flächen, scharfe Kanten) fordern vor allem höhere Auflösungen und geringeres Flimmern. Beides ist nur durch höhere Ablenkfrequenzen erreichbar.

Die Horizontalablenkspulen bilden mit einem Ablenkkondensator einen Schwingkreis, in dem die Energie jedoch nicht frei schwingt. Sie wird vielmehr durch einen elektronischen Zweirichtungsschalter (Thyristor oder Transistor mit antiparallel geschalteter Diode) so beeinflußt, daß sich ein zeilenfrequenter Sägezahnstrom ergibt. Dieser Schwingkreis ist verlustbehaftet; die verlorene Energie wird periodisch durch einen Schalter wieder zugeführt.

Aus der DE-A1-3 126 792 ist eine Ablenkschaltung mit Rasterkorrektur zur horizontalen Ablenkung des Elektronenstrahles von Bildröhren in Fernsehempfängern bekannt, die aus zwei Quellen gespeist wird. Das Schaltnetzteil des Fernsehempfängers enthält einen mit der Horizontalablenkung synchronisierten Inverter und einen Transformator. Der Transformator trägt eine erste Sekundärwicklung, die zur Gewinnung der Hochspannung dient. Weiterhin weist der Transformator zwei weitere Sekundärwicklungen auf, von denen die erste zur Ableitung einer Hinlaufspannung für die Horizontalablenkung und die zweite zur Gewinnung einer Gleichspannung dient, die von der Vertikalablenkung im Sinne einer Rasterkorrektur beeinflußt wird. Diese Gleichspannung wird über eine Entkopplungsdiode der Ablenkschaltung zugeführt.

Der Erfindung liegt die Aufgabe zugrunde, eine Schaltung anzugeben, mit der auch bei hohen Ablenkfrequenzen die Erzeugung des Horizontalablenkstromes möglichst einfach erfolgt.

Die Aufgabe wird erfindungsgemäß dadurch gelöst, daß die Horizontalablenkspulen masseferner liegen als der Ablenkkondensator und daß der Speisestromkreis am massefernen Ende des Ablenkkondensators angeschlossen ist.

Die erfindungsgemäße Schaltung hat die folgenden Vorteile: Da nur eine Spannungsquelle benötigt wird ergibt sich eine vereinfachte Schaltung. Der Ablenkstrom ist weitgehend unabhängig von Helligkeitsschwankungen, Netzbrumm usw. Es besteht eine hohe Flexibilität bei der Anpassung an andere Ablenksysteme und Ablenkfrequenzen. Da die Hochspannung und die übrigen Betriebsspannungen nicht mit den sehr hohen Ablenkfrequenzen verkoppelt sind, steigen die Störstrahlungen nicht mit den Ablenkfrequenzen an. Bei der erfindungsgemäßen Schaltung ist die im Speisestromkreis liegende Induktivität wesentlich kleiner, als dies bei herkömmlichen Schaltungen der Fall ist. Die genannten Vorteile erlauben auch einen vorteilhaften Einsatz der erfindungsgemäßen Schaltung bei herkömmlichen Ablenkfrequenzen.

Weitere vorteilhafte Ausgestaltungen der Erfindung sind den Unteransprüchen zu entnehmen.

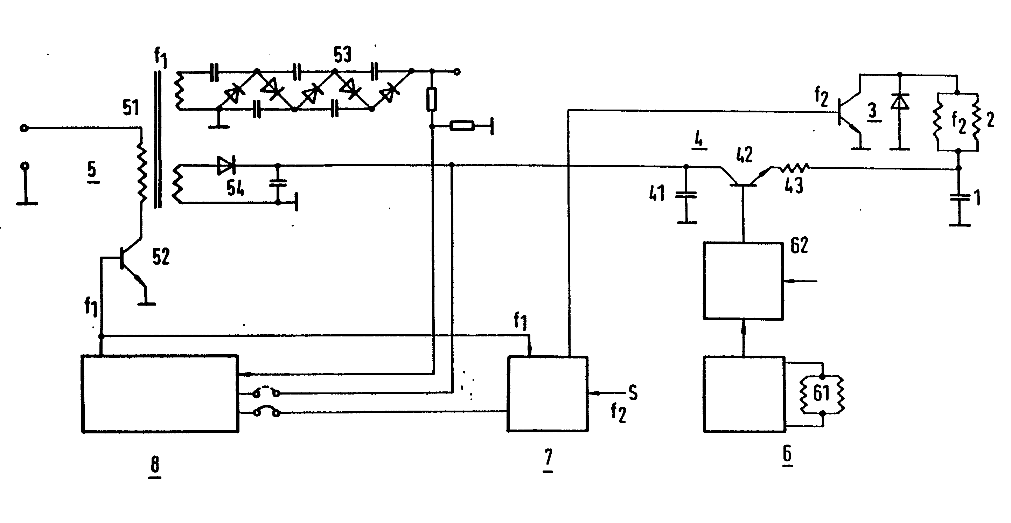

Im folgenden wird die Erfindung anhand eines Ausführungsbeispiels unter Zuhilfenahme der beiliegenden Zeichnung weiter erläutert.

Die Zeichnung zeigt als Ausführungsbeispiel ein erweitertes Blockschaltbild der Schaltung zur Erzeugung der Betriebsspannungen und des Horizontalablenkstromes eines Bildwiedergabegerätes.

Die Horizontalablenkspulen 2 bilden mit einem Ablenkkondensator 1 einen Serienschwingkreis, dem ein aus einem Transistor und einer dazu antiparallel geschalteten Diode bestehender Zweirichtungsschalter 3 parallel geschaltet ist. Durch eine Ansteuerung des Zweirichtungsschalters 3 mit der Horizontalablenkfrequenz f2 wird im Horizontalablenkstromkreis (1, 2, 3) ein Sägezahnstrom mit der Frequenz f2 erzeugt. Die im Horizontalablenkstromkreis verlorengehende Energie wird von einem Speisestromkreis 4 ausgeglichen. Der Speisestromkreis 4 ist hier durch einen Glättungskondensator 41, einen Regeltransistor 42 und eine Längsinduktivität 43 dargestellt. Der Speisestromkreis 4 ist an ein Spannungsversorgungsteil 5 angeschlossen.

Das Spannungsversorgungsteil 5 ist hier als Schaltnetzteil mit einem Transformator 51, einem Schalttransistor 52, einem Hochspannungsteil 53 und einer Gleichspannungsquelle 54 dargestellt. Die Gleichspannungsquelle 54 erzeugt die Betriebsspannung für den Speisestromkreis 4. Weitere Gleichspannungsquellen für weitere Betriebsspannungen können vorhanden sein.

Weiter dargestellt ist ein Vertikalablenkstromkreis 6 mit zwei Vertikalablenkspulen 61. Der Regeltransistor 42 des Speisestromkreises 4 wird vom Vertikalablenkstromkreis 6 über einen Bildgeometrieregler 62 angesteuert. Damit ist auf einfache Weise eine Ost-West-Korrektur möglich. Über weitere Eingänge des Bildgeometriereglers 62 und über dessen innere Beschaltung kann die Bildgeometrie weiter beeinflußt werden. Dies ist bei der erfindungsgemäßen Schaltung besonders einfach, weil hier eine Energieeinspeisung am massefernen Ende des als Fußpunktkondensator eingesetzten Ablenkkondensators 1 möglich ist. Die Längsinduktivität 43 kann recht klein sein, so daß die Beeinflussung der Bildgeometrie leicht möglich ist.

Der Schalttransistor 52 wird von einem Spannungsregelteil 8 mit einem Rechteckpuls angesteuert. Der Puls ist durch zwei Größen gekennzeichnet, die Impuls- und die Pausenlänge oder, gleichbedeutend, die Impulslänge und die Frequenz. Damit ist es beispielsweise möglich, zwei verschiedene Betriebsspannungen, darunter vorzugsweise die Hochspannung, unabhängig voneinander konstant zu halten. Voraussetzung hierfür ist, daß diese beiden Betriebsspannungen geeignet voneinander entkoppelt sind, beispielsweise durch entgegengesetzte Polung der sie gleichrichtenden Dioden oder der zugehörigen Wicklungen des Transformators 51.

In der Regel wird jedoch die Schaltfrequenz f1 des Schalttransistors 52 vorgegeben sein. Es bleibt damit nur noch ein weiterer Freiheitsgrad, der ausgenützt wird, um eine der Betriebsspannungen, vorzugsweise die Hochspannung, konstant zu halten.

Im gezeigten Beispiel wird die Schaltfrequenz f1 von einem Frequenzregelteil 7 bestimmt. Das Spannungsregelteil 8 ist so dargestellt, daß wahlweise einer seiner Eingänge mit einem von einer Betriebsspannung, vorzugsweise der Hochspannung, gewonnenen Referenzsignal oder ein anderer seiner Eingänge mit einem im Frequenzregelteil 7 gewonnenen Referenzsignal verbunden werden kann. Dem Frequenzregelteil 7 wird ein Synchronsignal S zugeführt, in dem die Horizontalablenkfrequenz f2 enthalten ist. Das Frequenzregelteil 7 steuert zum einen über den Zweirichtungsschalter 3 die Horizontalablenkung mit der Horizontalablenkfrequenz f2 und zum andern über das Spannungsregelteil 8 den Schalttransistor 52 mit der Schaltfrequenz f1. Die Schaltfrequenz f1 wird zweckmäßigerweise so gewählt, daß sie und die Horizontalablenkfrequenz f2 jeweils ganze Vielfache einer gemeinsamen Grundfrequenz sind. Im einfachsten Fall kann durch einen Teiler oder eine Phasenregelschleife erreicht werden, daß die Horizontalablenkfrequenz f2 ein ganzes Vielfaches der Schaltfrequenz f1 ist.

## Patentansprüche

1. Schaltung zur Erzeugung der Betriebsspannungen und des Horizontalablenkstromes eines Bildwiedergabegerätes mit einer Bildröhre, mit einem Schaltnetzteil, das die für den Betrieb der Bildröhre erforderliche Hochspannung sowie weitere benötigte Betriebsspannungen erzeugt, mit einem Vertikalablenkstromkreis (6), mit einem Horizontalablenkstromkreis (1, 2, 3), der im wesentlichen aus der Serienschaltung eines Ablenkkondensators (1) mit den Horizontalablenkspulen (2) und einem zu dieser Serienschaltung parallelliegenden Zweirichtungsschalter (3) besteht und mit einem an eine im Schaltnetzteil vorhandene Gleichspannungsquelle angeschlossenen Speisestromkreis (4), der den Horizontalablenkstromkreis (1, 2, 3) mit Energie versorgt und der mit dem Vertikalablenkstromkreis (6) so gekoppelt ist, daß die vom Speisestromkreis (4) abgegebene Energie zur Ost-West-Korrektur vertikalfrequent modulierbar ist, dadurch gekennzeichnet, daß die Horizontalablenkspulen (2) masseferner liegen als der Ablenkkondensator (1) und daß der Speisestromkreis (4) am massefernen Ende des Ablenkkondensators (1) angeschlossen ist.

2. Schaltung nach Anspruch 1, dadurch gekennzeichnet, daß im Schaltnetzteil (5) ein Spannungsregelteil (8) vorhanden ist, das das Tastverhältnis so einstellt, daß eine der Betriebsspannungen, vorzugsweise die Hochspannung, konstant ist und das die Schaltfrequenz (f1) so einstellt, daß eine weitere Betriebsspannung konstant ist.

3. Schaltung nach Anspruch 1, dadurch gekennzeichnet, daß im Schaltnetzteil (5) ein Spannungsregelteil (8) vorhanden ist, das das Tastverhältnis so einstellt, daß eine der Betriebsspannungen, vorzugsweise die Hochspannung, konstant ist und das die Schaltfrequenz (f1) so einstellt, daß sie einer vorgegebenen Frequenz entspricht.

4. Schaltung nach Anspruch 3, dadurch gekennzeichnet, daß ein Frequenzregelteil (7) vorhanden ist, das an das Spannungsregelteil (8) ein Signal abgibt, mit dem erreicht wird, daß die Schaltfrequenz (f1) und die Horizontalablenkfrequenz (f2) jeweils ganze Vielfache einer gemeinsamen Grundfrequenz sind.

## Claims

1. Circuit for producing the operating voltages and the horizontal-deflection current for picture-reproducing: equipment comprising a picture tube, a switching power supply which provides the necessary high voltage for the operation of the picture tube and other necessary operating voltages, a vertical-deflection circuit (6), a horizontal-deflection circuit (1, 2, 3) consisting essentially of a series combination formed by a deflection capacitor (1) and the horizontal-deflection coils (2) and by a two-way switch (3) in parallel with said series combination, and a supply circuit (4) connected to a DC source in the switching power supply, which supply circuit (4) supplies energy to the horizontal-deflection circuit (1, 2, 3) and is coupied to the vertical-deflection circuit (6) in such a may that the energy delivered by the supply circuit (4) can be modulated at the vertical frequency to provide horizontal pincushion correction, <u>characterized in</u> that the horizontal-deflection coils (2) are located further from earth than the deflection capacitor (1) and that the supply circuit (4) is connected to the unearthed end of the deflection capacitor (1).

2. A circuit as claimed in Claim 1, characterized in that the switching power supply (5) contains a voltage regulator (8) which adjusts the pulse duty factor in such a way that one of the supply voltages, preferably the high voltage, is constant, and which adjusts the switching frecuency (f1) in such a way that a further supply voltage is constant.

3. A circuit as claimed in Claim 1, characterized in that the switching power supply (5) contains a voltage regulator (8) which adjusts the pulse duty factor so that one of the supply voltages, preferably the high voltage, is constant, and which adjusts the switching frequency (f1) to a predetermined frequency.

4. A circuit as claimed in Claim 3, characterized in that a frequency regulator (7) is provided which delivers to the voltage regulator (8) a signal whereby the exitching frequency (f1) and the horizontal-deflection frecuency (f2) are made integral multiples of a common fundamental frequency.

## Revendications

1. Circuit pour engendrer les tensions d'alimentation et le courant le déviation horizontale d'un dispositif de reproduction d'image incluant un tube image, comportant un circuit à découpage produisant la haute tension nécessaire pour l'alimentation du tube image, de même que d'autres tensions d alimentation nécessaires, un circuit de dévitation verticale (6), un circuit de déviation horizontale (1, 2, 3), lequel comprend essentiellement un condensateur de déviation (1) en série avec la bobine de déviation horizontale (2) et, en parallèle sur ce circuit série, un commutateur à conduction bi-directionnelle (3), ainsi qu'un circuit d'alimentation (4) couplé à une source de tension continue d'un circuit existant, lequel alimente en énergie le circuit de déviation horizontale (1, 2, 3,) et est couplé au circuit de déviation verticale (6) de manière que l'énergie débitée par le circuit d'alimentation (4) soit modulable à la fréquence de déviation verticale pour la correction Est-Ouest, <u>caractérisé en ce que</u> la bobine de déviation horizontale (2) est plus éloignée de la masse que le condensateur de déviation (1) et en ce que le circuit d'alimentation (4) est couplé à la borne la plus éloignée de la masse du condensateur de déviation (1).

2. Circuit conforme à la revendicaticn 1, caractérisé en ce qu' un dispositif de régulation de tension (8) est prévu dans le circuit à découpage (5), dont le rapport cyclique est ajusté de façon qu'une des tensions d'alimentation, de préférence la haute tension, soit constante et dont la fréquence de commutation (f1) est ajustée de façon qu'une autre tension d'alimentation soit constante.

3. Circuit conforme à la revendication 1, caractérisé en ce qu'un dispositif de régulation de tension (8) est prévu dans le circuit à découpaqe (5), dont le rapport cyclique est ajusté de façon qu'une des tensions d'alimetation, de préférence la haute tension, soit constante et dont la fréquence de commutation (f1) est ajustée de façon qu'elle corresponde à une fréquence prédéterminée.

4. Circuit conforme à la revendication 3, caractérisé en ce quil est prévu un dispositif de réglage de fréquence (7) qui applique un signal au dispositif de régulation de tension (8), par lequel on obtient que la fréquence de découpage (f1) et la fréquence de déviation horizontale (f2) soient chacune un multiple entier d'une même fréquence de base.